Europäisches Patentamt

European Patent Office

Office européen des brevets

(11) Publication number: **0 256 884**
A2

(19)

# (12) EUROPEAN PATENT APPLICATION

(21) Application number: 87307306.8

(22) Date of filing: 18.08.87

(51) Int. Cl.⁴: **G 01 T 3/00**
G 01 T 5/10

(30) Priority: 18.08.86 US 897465

(43) Date of publication of application:
24.02.88 Bulletin 88/08

(84) Designated Contracting States:
BE CH ES FR GB IT LI

(71) Applicant: WESTINGHOUSE ELECTRIC CORPORATION
Westinghouse Building Gateway Center
Pittsburgh Pennsylvania 15222 (US)

(72) Inventor: Gold, Raymond
1982 Greenbrook Boulevard
Richland Washington 99352 (US)

Roberts, James Herbert
2002 Howell
Richland Washington 99352 (US)

Ruddy, Francis Henry
2101 Pendleton Drive
Monroeville, PA (US)

(74) Representative: van Berlyn, Ronald Gilbert
23, Centre Heights
London, NW3 6JG (GB)

(54) **Method for detecting and quantifying impurity actinides on fissionable deposits.**

(57) A method is described for determining the amount and spatial distribution of impurity actinides in fissionable deposits used for measurement of solid state track recorder fission rate and neutron fluence. For example, a $^{239}$Pu fissionable deposit is autoradiographed with an alpha particle-sensitive track recorder which is then subjected to a four hour etch at room temperature. The etch induction time for the $^{239}$Pu alpha particles is just barely exceeded, so that the $^{239}$Pu tracks appear as very immature dots on the surface of the solid state track recorder. The $^{235}$U tracks, on the other hand, are correspondingly etched longer than their respective shorter etch induction time and appear as much more mature, longer tracks. The amounts of $^{235}$U and $^{239}$Pu present can be calculated from the numbers of different tracks that are counted.

EP 0 256 884 A2

## Description

## METHOD FOR DETECTING AND QUANTIFYING IMPURITY ACTINIDES ON FISSIONABLE DEPOSITS

The invention which is the subject of this application was created under a contract with the U.S. Department of Energy.

This invention relates to monitoring neutron fluence and, more particularly, to a method for detecting and quantifying impurity actinides in fissionable deposits used for neutron fluence measurements.

Alpha particle autoradiography using solid state track recorders has proven useful for quantitative determination of the amount of an alpha emitting isotope present in a thin source. The nuclear industry presently requires such quantitative determinations of the amount and uniformity of actinides present in thin fissionable deposits produced for solid state track recorder neutron dosimetry and fission rate determinations.

Accordingly, it is the principal object of the present invention to provide a method for detecting and quantifying impurity actinides in fissionable deposits which is capable of distinguishing tracks of contaminant alpha emitters from those produced by the major nuclide in the deposit, particularly for application to environmental and biological trace level measurement.

With this object in view, the present invention resides in an autoradiography method for measuring the amount of at least one spontaneously, alpha-decaying impurity in a fissionable deposit of at least one selected, spontaneously alpha-decaying isotope that has a higher energy than the at least one impurity, characterized by the steps of contacting an alpha particle-sensitive track recorder with the fissionable deposit for a time sufficient to accumulate alpha tracks of the at least one impurity and alpha tracks of the at least one selected isotope in the track recorder, etching the track recorder to a period of time to reveal the alpha tracks of the at least one impurity and of the at least one selected isotope, each having different visual characteristics as a result of the alpha tracks of the at least one impurity and of the at least one selected isotope having different etch activation times due to the different alpha-decay energies, and counting the respective tracks to determine at least one of the amount of the at least one impurity and the spatial distribution of the alpha tracks of the at least one impurity in the fissionable deposit.

To achieve the foregoing and other objects of the present invention, and in accordance with the purposes of the invention, there is provided a method for determining the amount and spatial distribution of impurity actinides in fissionable deposits. An example of this method is where a $^{239}$Pu fissionable deposit is autoradiographed using an alpha-sensitive track recorder which is subjected to a four hour etch at room temperature. The etch induction time for the $^{239}$Pu alpha particles is just barely exceeded and the $^{239}$Pu alpha tracks appear as very immature dots on the surface of the solid state track recorder. On the other hand, the $^{235}$U alpha tracks in the same etch are etched longer than their respective etch induction time and appear as much more mature, longer tracks. The amount of $^{235}$U and $^{239}$Pu present can be calculated from the numbers of respective tracks counted.

The accompanying drawing, which is incorporated in and constitutes a part of the specification, illustrates the invention, and together with the description, serves to explain the principles of the invention.

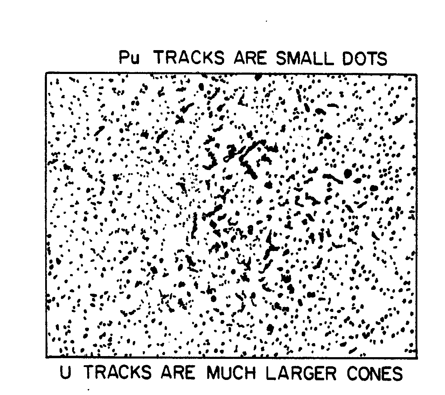

Fig. 1 represents an etched autoradiograph of a $^{239}$Pu fissionable deposit.

Determination of the amount and spatial distribution of impurity actinides on fissionable deposits used for measurement of solid state track recorder fission rates, neutron fluence and fission chamber fissionable deposits is of importance if extremely high accuracies are to be attained. Alpha particle solid state track recorder autoradiography coupled with differential etching of the alpha tracks based on the energy dependence of etch induction time in an alpha-sensitive track recorder provides a means to distinguish tracks of contaminant alpha emitters from those produced by the major nuclide in the deposit.

More particularly, an alpha-sensitive track recorder, such as a cellulose nitrate solid state track recorder which is available from the Kodak-Pathe' company, or a CR-39 solid state track recorder, is placed in firm contact with the fissionable deposit for a time sufficient to accumulate an optimum density of alpha tracks, approximately $2 \times 10^5$ tracks/cm$^2$, in the solid state track recorder. After etching to reveal the tracks, the solid state track recorder is microscopically scanned and the amount and uniformity of fissionable material in the deposit are determined by the number and spatial distribution of alpha tracks on the solid state track recorder.

It has been determined that the time required to initiate the etching of a track, referred to as the "etch induction time," depends on the energy and atomic number of the particle producing the track. In general, the tracks of less energetic particles appear earlier in the etch and initially etch faster than the tracks of more energetic particles. The presence of impurities such as uranium, particularly $^{235}$U impurities, on such a fissionable deposit, leads to an alteration of the fission rate that would otherwise be observed in a neutron field. Since the alpha particle energies of $^{235}$U are less than those of $^{237}$Np and $^{239}$Pu, less time is required to develop the $^{235}$U alpha particle tracks.

This principle is exemplified by Fig. 1 herein which represents an alpha autoradiograph of a $^{239}$Pu fissionable deposit. Here a $^{239}$Pu fissionable deposit, namely, $1.58 \times 10^{-9}$g/cm$^2$ of $^{239}$Pu was autoradiographed. The autoradiograph was obtained by placing an alpha particle-sensitive track recorder, e.g., cellulose nitrate or CR-39, in firm contact with the actinide fission deposit. Alpha particles from decay in the actinide fission deposit entered the track recorder creating damage sites which were subsequently etched to provide the autoradiograph.

Impurity alpha tracks from uranium may be distinguished from plutonium alpha tracks by the differential effect of etching, due to the different etch induction times for the two types of tracks of the alpha rays with the two different characteristic energies. The cellulose nitrate solid state track recorder was subjected to a four hour etch at room temperature. The etch induction time for the $^{239}$Pu alpha particles is just barely exceeded and the $^{239}$Pu alpha tracks appear as very immature dots on the surface of the solid state track recorder with an overall track density of $4.13 \times 10^6$ tracks/cm$^2$. The uniformity and amount of $^{239}$Pu can be determined by counting the $^{239}$Pu tracks.

The $^{235}$U alpha tracks, on the other hand, have been etched longer, and appear as much more mature, longer tracks with a projected length of about $7 \times 10^{-4}$ cm. For the experimental conditions, each uranium track was determined to correspond to an impurity level of $4 \times 10^{-11}$ gram of natural uranium. The $^{235}$U tracks usually appear as clusters, and the amount of $^{235}$U present can be calculated from the number of these tracks that are counted.

For very small amounts of $^{235}$U, deposits can be subjected to extremely long time-exposure autoradiographs, and the resulting $^{239}$Pu tracks can be completely eliminated by etching for a shorter time to result in development of only the $^{235}$U tracks.

In addition to the embodiment described above, the method according to the present invention can be used in trace analysis related to environmental and biological applications. The present invention for instance allows distinguishing between different actinide impurities that are present, or determining their amounts, with high sensitivity and accuracy. For instance, the possible release by man of actinides not normally present in the environment or in amounts above natural levels, can thus be monitored. An example is the determination of trace levels of $^{239}$Pu in the nature environment.

As is also indicated in Fig. 1, the fact that different etch induction times exist for different energies allows discriminating between the tracks of different energy alphas on the observation of track size. Thus, even if the alpha energy of the spontaneous alpha decay of the actinide having the higher alpha track density is less than the alpha energy of another spontaneously alpha-decaying actinide having a lower alpha track density, the two sets of alpha tracks can be usefully discriminated on the basis of track size in any case. Of course, for such cases, the higher density alpha tracks of the actinide with the correspondingly lower etch induction time cannot be entirely suppressed as in the opposite case discussed above so that the lower density alpha tracks of the higher energy alphas must be counted on top of the others.

The invention can also be extended to measure the amounts of a plurality of spontaneously alpha-decaying, fissionable, impurity actinides having respective different alpha energies lower than the alpha energy of the selected actinide, by contacting same with the fissionable deposit for respective times, depending on their concentration, and etching same for respective times to selectively reveal on each respective track recorder all the tracks of etch activation times below respective etch periods.

The foregoing is considered illustrative only of the principles of the invention. Further, since numerous modifications and changes will readily occur to those skilled in the art, it is not desired to limit the invention to the exact construction and operation shown and described. Accordingly, all suitable modifications and equivalents, falling with the scope of the invention and the appended claims, may be resorted to.

## Claims

1. An autoradiography method for measuring the amount of at least one spontaneously, alpha-decaying impurity in a fissionable deposit of at least one selected, spontaneously alpha-decaying isotope that has a higher energy than the at least one impurity, characterized by the steps of contacting an alpha particle-sensitive track recorder with the fissionable deposit for a time sufficient to accumulate alpha tracks of the at least one impurity and alpha tracks of the at least one selected isotope in the track recorder, etching the track recorder to a period of time to reveal the alpha tracks of the at least one impurity and of the at least one selected isotope, each having different visual characteristics as a result of the alpha tracks of the at least one impurity and of the at least one selected isotope having different etch activation times due to the different alpha-decay energies, and counting the respective tracks to determine at least one of the amount of the at least one impurity and the spatial distribution of the alpha tracks of the at least one impurity in the fissionable deposit.

2. A method as recited in claim 1, characterized in that the fissionable deposit is selected from the group consisting of $^{237}$Np and $^{239}$Pu.

3. A method as recited in claim 1 or 2, characterized in that the at least one impurity is $^{235}$U.

4. A method as recited in claim 1, 2 or 3 characterized in that etching is performed for four hours at room temperature.

5. A method as recited in any of claims 1 to 4, characterized in that the fissionable deposit is contacted with a further alpha particle-sensitive track recorder for a respectively longer period of time, and the further alpha particle-sensitive track recorder is etched for a respectively shorter period of time to reveal only the alpha tracks of the at least one impurity.

6. A method as recited in claim 5, wherein the fissionable deposit includes a plurality of the impurities with respective different alpha decay energies, characterized in that a plurality of further solid state track recorders are contacted with the fissionable deposit for respective periods of time longer than the sufficient time for alpha track collection, and each further solid state track recorder is etched for a respective different period of time, all of which periods of time are shorter than the period of time for the revelation of the alpha tracks of the one impurity, for determining the respective amounts of the plurality of impurities from the respective counted tracks.

0256884

Pu TRACKS ARE SMALL DOTS

U TRACKS ARE MUCH LARGER CONES